# EUROPÄISCHE PATENTSCHRIFT

(11) **EP 3 015 972 B1**
(45) Veröffentlichungstag und Bekanntmachung des Hinweises auf die Patenterteilung: **03.06.2020**
(21) Anmeldenummer: 15191410.8
(22) Anmeldetag: 26.10.2015
(51) Int. Cl.: G06F 3/12

(54) **VERFAHREN ZUR ÜBERTRAGUNG VON DRUCKDATEN, SERVER UND MOBILES ENDGERÄT**
METHOD FOR TRANSMITTING PRINT DATA, SERVER AND MOBILE END DEVICE
PROCEDE DE TRANSMISSION DE DONNEES D'IMPRESSION, SERVEUR ET TERMINAL MOBILE

(30) Priorität: 31.10.2014 DE 102014115900; 19.12.2014 DE 102014226625
(43) Veröffentlichungstag der Anmeldung: 04.05.2016
(73) Patentinhaber: Cortado AG, 10559 Berlin (DE)
(72) Erfinder: Mickeleit, Carsten, 12205 Berlin (DE); Trappe, Bernd, 15366 Hoppengarten OT Birkenstein (DE)
(74) Vertreter: Gulde & Partner

(56) Entgegenhaltungen:
- EP-A2- 1 471 418
- EP-A2- 1 712 986
- US-A1- 2013 222 827
- US-B2- 8 736 877

## Beschreibung

### Technisches Gebiet

Die Erfindung betrifft ein Verfahren zur Übertragung von Druckdaten, einen Server und ein mobiles Endgerät. Weiterhin betrifft die Erfindung ein entsprechendes computerlesbares Speichermedium.

### Hintergrund

Terminal-Server-Anwendungen, deren erweiterte Varianten auch als Virtual Desktop Anwendungen (VD-Anwendungen) bezeichnet werden, ermöglichen benötigte Hardware an einem oder wenigen Orten, beispielsweise Rechenzentren, zu zentralisieren, da an den Terminals lediglich standardisierte Hardware benötigt wird, die die nötigen Ein-/Ausgabemittel bereitstellt. Dies ermöglicht unter anderem Verwaltung der Anwendung, Datenverarbeitung und Datensicherung zentral vorzunehmen. Hardwaredefekte an den Terminal beeinflussen die Anwendung nicht und alle Terminals arbeiten mit einer selben Version der Anwendung.

Die zunehmende Verbreitung von mobilen Endgeräten mit mobiler Datenverbindung ermöglicht es, die mobilen Endgeräte, also beispielsweise einen Tablet Computer oder ein Mobiltelefon, als Terminal zu verwenden.

Wird eine VD-Sitzung auf dem Terminal gestartet und in dieser gearbeitet, hat der Benutzer nur Zugriff auf die Anwendungen und Daten, die auf dem VD-Server liegen. Lokal, d.h. auf dem Endgerät installierte, Anwendungen haben keinen Zugriff auf die Daten auf dem Server und Anwendungen, die auf dem VD-Server installiert sind, können nicht auf Daten zugreifen, die auf dem Terminal als beispielsweise auf dem mobilen Endgerät gespeichert sind. Die einzigen Ressourcen des mobilen Endgeräts, die der Benutzer im Rahmen der Sitzung nutzen kann, sind die, die er zur Bedienung dieser Sitzung benötigt. Das sind beispielsweise eine Tastatur, die virtuell auf dem Bildschirm eingeblendet oder tatsächlich physisch vorhanden sein kann, der Bildschirm, und ein Zeigemittel, üblicherweise eine Maus oder ein berührungsempfindlicher Bildschirm. Weitere Ressourcen stehen dem Benutzer im Rahmen der Sitzung nicht zur Verfügung.

Will der Benutzer im Rahmen der Anwendung veränderte oder erzeugte Daten drucken, so muss der Benutzer Zugriff auf einen mit dem Server verbundenen Drucker haben, für den die Anwendung nach einem Druckauftrag durch den Benutzer die Daten druckbar aufbereitet und so Druckdaten erzeugt, die der Server anschließend an den Drucker weiterleiten kann.

Dem Benutzer können in der VD-Sitzung ein oder mehrere Drucker eingerichtet worden sein. Dabei handelt es sich um Drucker, die sich im Firmennetzwerk befinden. Das ist vorteilhaft, wenn sich der Benutzer an seinem Arbeitsplatz befindet. Ist er allerdings mit seinem mobilen Endgerät außerhalb des Firmengeländes unterwegs, sind diese Drucker für ihn nicht nutzbar. Will der Benutzer ein Dokument drucken, auf das er nur über das geschlossene Netzwerk Zugriff hat, erfordert das mehrere Schritte, schlägt nur einer dieser Schritte fehl, kann der Benutzer das Dokument nicht ausdrucken. Im ersten Schritt muss der Benutzer das Dokument aus dem Firmennetz heraus auf sein mobiles Endgerät kopieren. Von dort wird das Dokument an den Drucker geschickt, vorausgesetzt, das Dokument ist im richtigen Druckdatenformat. Das kann der Benutzer erst beurteilen, wenn er den Ausdruck in den Händen hält. Da er über keine weiteren Hilfsmittel verfügt, muss er das Dokument im Firmennetz in das richtige Format bringen. Eine Aufgabe, die üblicherweise vom Druckertreiber erledigt wird, der das gewandelte Dokument im Anschluss an den Drucker weiterleitet. Ein Eingriff des Benutzers ist an der Stelle nicht vorgesehen. Der Benutzer muss demnach den üblichen Druckprozess unterbrechen, um an die Druckdaten zu gelangen. Es ist offensichtlich, im Stand der Technik steht ein Benutzer, der über ein mobiles Endgerät und eine mobile Datenverbindung eine VD-Sitzung auf einem Server durchführt, vor großen Problemen, eines der auf dem Server befindlichen Dokumente auf einem lokal verfügbaren Drucker auszugeben.

Mobile Endgeräte, auf denen beispielsweise das Betriebssystem iOS oder Android installiert ist, verfügen über die Funktionalität, von einem Benachrichtigungsserver angesprochen zu werden. Dieser stellt die nötige Infrastruktur bereit, um unabhängig von bestehenden Netzwerktopologien die mobilen Endgeräte über eine eindeutige ID anzusprechen und ihnen Daten zu übersenden. Dies ist eine reine Einwegkommunikation vom Benachrichtigungsserver zum mobilen Endgerät.

Beim bekannten Verfahren startet der Benutzer einen Druckauftrag durch eine Operation in der Bedienoberfläche der genutzten Anwendung auf dem VD-Server. Das ist üblicherweise die Auswahl des Menüpunktes "Drucken" oder das direkte Drücken einer Schaltfläche. Möglich sind danach noch einige weitere Schritte, wie die Auswahl des gewünschten Druckers, falls mehrere installiert sind, und Parameter für den Druckauftrag, z.B. die Papiergröße oder beidseitiger Druck festlegen. Danach wird der Druckauftrag auf dem Server an den Druckertreiber des gewählten Druckers weitergeleitet, der die Daten in das erforderliche Format bringt und diese Daten an den Drucker weiterleitet. Dieses Verfahren ist für mobile Endgeräte, die sich außerhalb des Netzwerks befinden, nicht praktikabel, da der Benutzer keinen Zugriff auf den Drucker hat, also nicht an den Ausdruck gelangen kann. EP 3 015 972 A1 befasst sich mit einem Verfahren zum Ausdrucken von Daten bei Nutzung eines Nachrichten-Signalisierungs-Services. EP 1 471 814 beschreibt eine verteilte Kontrolle der Interaktion zwischen einer Informationsvorrichtung und einer peripheren Vorrichtung.

### Zusammenfassung der Erfindung

Die Erfinder haben festgestellt, dass ein Verfahren zur Übertragung von Druckdaten das Drucken von Daten für den Benutzer erleichtert. Die Erfindung soll es einem Benutzer ermöglichen, aus einer Sitzung heraus einen Druckauftrag an einen lokal angeschlossenen Drucker zu senden. Ziel der Erfindung ist es, dem Benutzer einer VD-Sitzung an einem mobilen Endgerät die auf diesem mobilen Endgerät eingerichteten Drucker in der VD-Sitzung nutzbar zu machen.

Erfindungsgemäß wird daher ein Verfahren gemäß Anspruch 8 zur Übertragung von Druckdaten vorgestellt. Erfindungsgemäß werden weiterhin ein Server gemäß Anspruch 1 und ein mobiles Endgerät gemäß Anspruch 4 zur Verfügung gestellt.

Das erfindungsgemäße Verfahren umfasst folgende Schritte: Registrieren eines mobilen Endgerätes in einer auf einem Server ausgeführten Anwendung und/oder Übermitteln einer ID des mobilen Endgerätes im Rahmen eines Aufbaus einer Sitzung der Anwendung, wobei die Anwendung nicht auf Daten, die lokal auf dem mobilen Endgerät gespeichert sind, zugreifen kann, Steuerung der Anwendung zur Erzeugung von auf dem Server zu speichernden oder zur Veränderung von auf dem Server gespeicherten Daten durch einen Benutzer des mobilen Endgerätes, Auslösen eines Druckauftrags für die Daten in der Anwendung durch den Benutzer, Weiterleiten des Druckauftrags an einen auf dem Server angelegten virtuellen Drucker, Erzeugen der Druckdaten aus den Daten durch den virtuellen Drucker, Speichern der Druckdaten, Benachrichtigung des mobilen Endgerätes, dass die Druckdaten gespeichert sind, Herstellen einer Verbindung vom mobilen Endgerät zum Server durch das mobile Endgerät und Weiterleiten der Druckdaten vom Server zu einem mit dem mobilen Endgerät in Verbindung stehenden Drucker über das mobile Endgerät.

Auf dem erfindungsgemäßen Server ist eine Anwendung gespeichert, die konfiguriert ist, auf einem Bildschirm eines mobilen Endgeräts eine graphische Benutzerschnittstelle für die Anwendung anzuzeigen und von dem mobilen Endgerät über eine Tastatur und/oder ein Zeigemittel zur Erzeugung von auf dem Server zu speichernden oder zur Veränderung von auf dem Server gespeicherten Daten gesteuert zu werden. Dabei kann die Anwendung nicht auf Daten, die lokal auf dem mobilen Endgerät gespeichert sind, zugreifen. Die Anwendung ist konfiguriert, vom mobilen Endgerät aus so gesteuert zu werden, dass aus der Anwendung heraus auf dem Server Druckdaten aus den Daten erzeugt werden. Der Server ist dadurch gekennzeichnet, dass die Druckdaten für einen Druck auf einem an dem mobilen Endgerät angeschlossenen oder anschließbaren Drucker erzeugt werden, und das mobile Endgerät über Verfügbarkeit der Druckdaten nach der Erzeugung der Druckdaten vom Server benachrichtigt wird.

Das erfindungsgemäße mobile Endgerät umfasst eine Tastatur und/oder ein Zeigemittel zur Steuerung einer auf einem Server ausgeführten Anwendung zur Erzeugung von auf dem Server zu speichernden oder zur Veränderung von auf dem Server gespeicherten Daten. Dabei kann die Anwendung nicht auf Daten, die lokal auf dem mobilen Endgerät gespeichert sind, zugreifen. Das mobile Endgerät ist konfiguriert, in Reaktion auf eine Benachrichtigung über Verfügbarkeit von aus den Daten erzeugten Druckdaten auf dem Server die Druckdaten von dem oder einem anderen Server abzufragen und an einen Drucker weiterzuleiten.

In einer bevorzugten Ausführungsform des Servers ist auf dem Server ein virtueller Drucker angelegt, der konfiguriert ist, aus den Daten die Druckdaten in pdf-Format, in PCL-Format und/oder in Postscript-Format zu erzeugen.

Die Druckdaten können mit druckbezogenen weiteren Informationen angereichert sein. Die Druckdaten können auf einem anderen Server gespeichert werden und das mobile Endgerät kann auch über eine Adresse des anderen Servers benachrichtigt werden.

In einer bevorzugten Ausführungsform des mobilen Endgerätes ist das mobile Endgerät konfiguriert, in Reaktion auf die Benachrichtigung eine Bestätigung eines Benutzers abzufragen, ehe die Druckdaten vom Server abgefragt und an den Drucker weitergeleitet werden. Dem Benutzer kann im Rahmen der Bestätigung die Möglichkeit gegeben werden, den Drucker aus einer Liste von Druckern auszuwählen und/oder mindestens eine Druckeinstellung zu ändern.

Bei einem Aufruf der Anwendung kann das mobile Endgerät eine Registrierung auf dem Server vornehmen und/oder eine ID des mobilen Endgerätes an den Server übermitteln und das mobile Endgerät kann über die Verfügbarkeit der Druckdaten anhand der Registrierung oder der übermittelten ID des mobilen Endgerätes informiert werden.

Das mobile Endgerät kann konfiguriert sein, die Druckdaten von einem anderen Server abzufragen, wobei eine Adresse des anderen Servers im mobilen Endgerät vorbestimmt gespeichert sein kann oder von der Benachrichtigung umfasst sein kann.

Erfindungsgemäß wird schließlich auch ein computerlesbares Speichermedium vorgeschlagen, auf dem eine Anwendung und/oder ein Modul gespeichert ist. Dabei ist die Anwendung konfiguriert, auf einem Server ausgeführt zu werden und daraufhin auf einem Bildschirm eines mobilen Endgeräts eine graphische Benutzerschnittstelle für die Anwendung anzuzeigen und von dem mobilen Endgerät über eine Tastatur und/oder ein Zeigemittel zur Erzeugung von auf dem Server zu speichernden oder zur Veränderung von auf dem Server gespeicherten Daten gesteuert zu werden. Dabei kann die Anwendung nicht auf Daten, die lokal auf dem mobilen Endgerät gespeichert sind, zugreifen. Die Anwendung ist dabei konfiguriert, bei Ausführung durch einen Server von einem mobilen Endgerät aus so gesteuert zu werden, dass aus der Anwendung heraus auf dem Server Druckdaten aus den Daten für einen Druck auf einem an dem mobilen Endgerät angeschlossenen oder anschließbaren Drucker erzeugt werden können, und das mobile Endgerät über Verfügbarkeit der Druckdaten nach der Erzeugung der Druckdaten vom Server benachrichtigt werden kann. Das Modul ist konfiguriert, bei Ausführung auf einem mobilen Endgerät in Reaktion auf eine Benachrichtigung über Verfügbarkeit von aus den Daten erzeugten Druckdaten auf einem Server die Druckdaten von dem oder einem anderen Server abzufragen und an einen mit dem mobilen Endgerät verbundenen Drucker weiterzuleiten.

Erfindungsgemäß kann eine Infrastruktur mit einem Benachrichtigungsserver so genutzt werden, dass ein Modul, das auf dem mobilen Endgerät ist, auf eine spezifische Nachricht des Benachrichtigungsservers so reagiert, dass es die Druckdaten vom Server abfragt und an den Drucker weiter leitet.

Vorteilhafte Weiterbildungen der Erfindung sind in den Unteransprüchen angegeben und in der Beschreibung beschrieben.

### Zeichnung

Ausführungsbeispiele der Erfindung werden anhand der Zeichnung und der nachfolgenden Beschreibung näher erläutert. Es zeigt schematisch und beispielhaft:

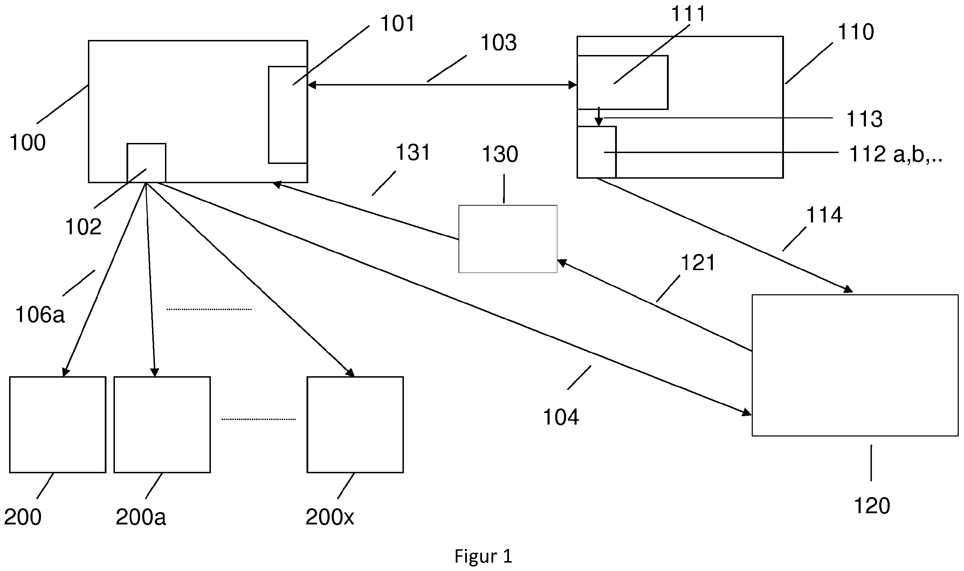

- Figur 1: einen Ablauf des erfindungsgemäßen Verfahrens.

Beispiele betreffen ein Verfahren zur Druckdatenübertragung, Komponenten und eine Anordnung zur Realisierung des Verfahrens, ein entsprechendes Computerprogramm und ein entsprechendes computerlesbares Speichermedium (Computerprogrammprodukt) auf dem das Computerprogramm gespeichert ist. Das Verfahren ermöglicht insbesondere, aus einer Terminalserver- oder Virtual-Desktop-Sitzung, die von einem optional mobilen Endgerät aus gesteuert wird, auf einen Drucker, der mit dem mobilen Endgerät verbunden ist, im Rahmen der Anwendung erzeugte und/oder veränderte Daten, beispielsweise ein Dokument, auszudrucken. Beispiele für mobile Endgeräte sind Tablet Computer und Smartphone.

Die zunehmende Verbreitung von mobilen Endgeräten und mobiler Datenverbindung ermöglicht es, eine solche Sitzung auf einem Tablet Computer oder sogar einem mobilen Telefon einzurichten. Der besondere Vorteil eines Virtual Desktops auf diesen Endgeräten liegt in der strikten Trennung von Daten und Anwendungen.

Insbesondere lokal installierte Drucker befinden sich aber nicht im direkten Zugriff der Anwendung, wenn der Benutzer aus der Sitzung heraus drucken möchte. Der Server hat nämlich keine Kenntnis über die am mobilen Endgerät angeschlossenen Drucker. Es können also keine Drucker, die mit dem mobilen Endgerät verbunden sind, auf dem Server installiert werden. Lediglich auf zentral installierte Drucker, beispielsweise Drucker, die sich im Firmennetzwerk befinden und die über den Server adressierbar sind, kann die Anwendung direkt zugreifen. Diese Drucker sind jedoch nicht nutzbar, wenn sich das mobile Endgerät nicht innerhalb des Firmennetzwerks befindet.

In einer beispielhaften Ausführungsform der Erfindung wird daher auf dem Server ein virtueller Drucker angelegt. Dieser Drucker ist konfiguriert, einen Druckauftrag für auf dem Server gespeicherte Daten entgegen zu nehmen und die Daten in Druckdaten zu wandeln.

Beispielsweise werden die Druckdaten in PDF-Format erzeugt, da dieses von allen Druckern, die sich über das Airprint-Protokoll mit dem mobilen Endgerät verbinden, beherrscht werden muss. Es ist ebenso möglich, dass Druckdaten in einem anderen druckfähigen Format, beispielsweise in PCL-Format oder in Postscript-Format erzeugt werden. Diese beiden haben den Vorteil, von einer breiten Menge von Druckern unterstützt zu werden. In anderen Beispielen werden andere Druckdatenformate erzeugt. Die erzeugten Druckdaten werden auf dem oder einem anderen Server nach ihrer Erzeugung für einen späteren Zugriff gespeichert.

Der Server oder der andere Server kann eine Liste von mobilen Endgeräten führen. Anhand der Liste kann im Falle mehrerer auf dem Server aktiver mobiler Endgeräte einem Benachrichtigungsserver mitgeteilt werden, welches mobile Endgerät über die Speicherung erzeugter Druckdaten informiert werden soll. Der Server informiert dann das entsprechende mobile Endgerät über die Speicherung der Druckdaten.

Dazu können beispielsweis Benachrichtigungsmechanismen verwendet werden, die auf dem mobilen Endgerät standardmäßig vorhanden sind. Beispielsweise kann bei mobilen Endgeräten, die auf dem Betriebssystem iOS basieren, der APN-Dienst ("Apple Push Notification") verwendet werden, um die Benachrichtigung an das mobile Endgerät zu übermitteln. Die Benachrichtigung wird von einem Modul empfangen, das auf dem mobilen Endgerät installiert wurde. Das Modul kann eine Verbindung zu dem Server herstellen, der die Druckdaten gespeichert hat, um die Druckdaten auf das mobile Endgerät zu übertragen und an einen an das mobile Endgerät angeschlossenen Drucker weiterzuleiten. Das Modul kann vor Übertragung der Druckdaten optional eine Meldung auf einer graphischen Benutzeroberfläche des mobilen Endgeräts ausgeben. Die Übertragung kann zudem eine vorhergehende Bestätigung durch den Benutzer des mobilen Endgeräts erfordern. Dann kann das Modul den Benutzer in der Meldung auch zu dieser Bestätigung auffordern. Der Benutzer kann zusätzlich oder alternativ die Möglichkeit haben, einen Drucker auszuwählen und/oder Druckeinstellungen zu ändern.

Optional besteht die Möglichkeit, die Druckdaten mit Informationen anzureichern, die über die reinen Druckdaten hinausgehen. Da das Modul auf dem mobilen Endgerät die Daten empfängt und an den Drucker weiterleitet, besteht hier die Möglichkeit, die zusätzlich erzeugten Informationen auszulesen und daraus ableitend weitere Schritte durchzuführen. Dabei kann es sich um einfache Dinge handeln, wie Auswahl des Druckers beschränken oder bestimmte Einstellungen des Druckers festzulegen. Weitergehende Aktionen sind ebenso möglich, so könnte beispielsweise ein Dialog geöffnet werden, um dem Benutzer weitere Informationen anzuzeigen. Dies soll nur als Beispiel dienen, im Prinzip kann jede auf dem mobilen Endgerät technisch möglich Operation durch die zusätzlichen Informationen ausgelöst oder beeinflusst ist.

Figur 1 zeigt schematisch und beispielhaft einen Ablauf einer Ausführungsform des erfindungsgemäßen Verfahrens. In dem Verfahren werden Schritte ausgeführt, die den Druckauftrag entgegennehmen, die Umwandlung in das druckerspezifische Format vornehmen, dieses auf einem weiteren Server speichern, das mobile Endgerät über den abgeschlossene Umwandlung informieren, dieses dem Benutzer mitteilen und nach seiner Bestätigung die Druckdaten auf das mobile Endgerät übertragen, um diese dann im letzten Schritt an den angeschlossenen Drucker weiterzuleiten.

Ein Benutzer hat auf dem mobilen Endgerät 100 eine VD-Sitzung 101 gestartet, die über die Verbindung 103 auf dem Server 110 durchgeführt wird. Dazu hat der Server 110 eine virtuelle Umgebung 111 aufgebaut. In dieser sind die virtuellen Drucker 112 a,b,... eingerichtet. Es kann sich auch nur um einen virtuellen Drucker 112 handeln. In der Sitzung 101 löst der Benutzer einen Druckauftrag aus. Dieser wird über die Verbindung 113 an den ausgewählten virtuellen Drucker 112 weitergeleitet. Dieser virtuelle Drucker erzeugt die Druckdaten für den Drucker 200. Dabei können weitere Informationen, die für das Modul 102 auf dem mobilen Endgerät 100 bestimmt sind, hinzugefügt werden. Er leitet die Daten über die Verbindung 114 an den Server 120 weiter, wo sie bis zum Abruf gespeichert werden. Nach vollständigem Erhalt der Daten weist der Server 120 über die Verbindung 121 den Benachrichtigungsserver 130 an, das mobile Endgerät 100 über die Bereitstellung der Daten zu informieren. Der Benachrichtigungsserver 130 stellt die Verbindung 131 her und übermittelt die Nachricht an das mobile Endgerät 100. Das mobile Endgerät 100 stellt daraufhin eine Verbindung 104 zum Server 120 her und fordert die Druckdaten an. Aus diesem Datenstrom werden noch die Informationen herausgenommen, die vom Druckertreiber 112 zu den Druckdaten hinzugefügt wurden. Zum Abschluss werden die Druckdaten vom Modul 102 über die Verbindung 106 a,b,... an den Drucker 200 a,b,... geleitet.

Der Server 120 braucht Informationen, an welches mobile Endgerät der Benachrichtigungsserver die Erzeugung der Druckdaten melden soll. Dafür sind mehrere Verfahren denkbar:
- Das mobile Endgerät 100 wird vor dem Aufbau der Sitzung 101 beim Server 120 registriert.
- Beim Start der VD-Sitzung 101 wird vom mobilen Endgerät 100 seine ID an den VD-Server 110 übermittelt. Diese wird bei der Übertragung der Druckdaten 114 an den Server 120 übermittelt.

Umgekehrt braucht das mobile Endgerät die Information, auf welchem Server die Druckdaten gespeichert sind. Dafür sind ebenfalls mehrere Verfahren denkbar:
- Der Server 120 gibt seine Adresse in Schritt 121 an den Benachrichtigungsserver 130 weiter, dieser übermittelt diese Information zusammen mit der Nachricht in Schritt 131 an das mobile Endgerät 100.
- Bei der Einrichtung des Moduls 102 auf dem mobilen Endgerät 100 wird die Adresse des Servers 120 hinterlegt.

## Patentansprüche

1. Server (110), auf dem eine Virtual Desktop, VD, Anwendung gespeichert ist, die konfiguriert ist,
- auf einem Bildschirm eines mobilen Endgeräts (100) eine graphische Benutzerschnittstelle für die VD Anwendung anzuzeigen und
- von dem mobilen Endgerät über eine Tastatur und/oder ein Zeigemittel zur Erzeugung von auf dem Server (110) zu speichernden oder zur Veränderung von auf dem Server (110) gespeicherten Daten gesteuert zu werden,
wobei die VD Anwendung nicht auf Daten, die lokal auf dem mobilen Endgerät (100) gespeichert sind, zugreifen kann,
wobei die VD Anwendung eingerichtet ist, vom mobilen Endgerät (100) aus so gesteuert zu werden, dass
- aus der VD Anwendung heraus auf dem Server (110) Druckdaten aus den Daten erzeugt werden,
wobei die Druckdaten für einen Druck auf einem an dem mobilen Endgerät (100) angeschlossenen oder anschließbaren Drucker (200) erzeugt werden und
die Druckdaten an einen anderen Server (120) weitergeleitet und auf dem anderen Server (120) gespeichert werden, und das mobile Endgerät (100) über Verfügbarkeit der Druckdaten nach dem Speichern der Druckdaten von dem anderen Server via Benachrichtigungsserver (130) benachrichtigt wird, und die Adresse des anderen Servers (120) in dem mobilen Endgerät (100) vorbestimmt gespeichert ist oder von der Benachrichtigung umfasst ist.

2. Server (110) nach Anspruch 1, wobei auf dem Server (110) ein virtueller Drucker (112) angelegt ist, der konfiguriert ist, aus den Daten die Druckdaten in pdf-Format, in PCL-Format und/oder in Postscript-Format zu erzeugen.

3. Server (110) nach Anspruch 1 oder 2, wobei die Druckdaten mit druckbezogenen weiteren Informationen angereichert sind.

4. Mobiles Endgerät (100) mit einer Tastatur und/oder einem Zeigemittel zur Steuerung einer auf einem Server (110) ausgeführten Virtual Desktop, VD, Anwendung zur Erzeugung von auf dem Server (110) zu speichernden oder zur Veränderung von auf dem Server (110) gespeicherten Daten, wobei die VD Anwendung nicht auf Daten, die lokal auf dem mobilen Endgerät (100) gespeichert sind, zugreifen kann, wobei das mobile Endgerät (100) konfiguriert ist,
in Reaktion auf eine Benachrichtigung via Benachrichtigungsserver (130) über die Verfügbarkeit von aus den Daten auf dem Server (110) erzeugten Druckdaten,
die Druckdaten,
die an einen anderen Server weitergeleitet und auf dem anderen Server (120) (120) gespeichert worden sind,
von dem anderen Server (120) abzufragen und an einen an das mobile Endgerät angeschlossenen Drucker (200) weiterzuleiten, wobei die Adresse des anderen Servers (120) im mobilen Endgerät (100) vorbestimmt gespeichert ist oder von der Benachrichtigung umfasst ist.

5. Mobiles Endgerät nach Anspruch 4, wobei das mobile Endgerät (100) konfiguriert ist, in Reaktion auf die Benachrichtigung eine Bestätigung eines Benutzers abzufragen, ehe die Druckdaten von dem anderen Server (120) abgefragt und an den Drucker (200) weitergeleitet werden.

6. Mobiles Endgerät nach Anspruch 5, wobei der Benutzer im Rahmen der Bestätigung die Möglichkeit gegeben wird, den Drucker (200) aus einer Liste von Druckern auszuwählen und/oder mindestens eine Druckeinstellung zu ändern.

7. Server (110) nach einem der Ansprüche 1 - 3 oder mobiles Endgerät nach einem der Ansprüche 5 - 7, wobei bei einem Aufruf der VD Anwendung das mobile Endgerät (100) eine Registrierung auf dem Server (110) vornimmt und/oder eine ID des mobilen Endgerätes (100) an den Server (110) übermittelt und das mobile Endgerät (100) über die Verfügbarkeit der Druckdaten anhand der Registrierung oder der übermittelten ID des mobilen Endgerätes (100) informiert wird.

8. Verfahren zur Übertragung von Druckdaten, umfassend Schritte:
Registrieren eines mobilen Endgerätes (100) in einer auf einem Server (110) ausgeführten Virtual Desktop, VD, Anwendung und/oder Übermitteln einer ID des mobilen Endgerätes (100) im Rahmen eines Aufbaus einer Sitzung (101) der VD Anwendung, wobei die VD Anwendung nicht auf Daten, die lokal auf dem mobilen Endgerät (100) gespeichert sind, zugreifen kann,
Steuerung der VD Anwendung zur Erzeugung von auf dem Server (110) zu speichernden oder zur Veränderung von auf dem Server (110) gespeicherten Daten durch einen Benutzer des mobilen Endgerätes (100),
Auslösen eines Druckauftrags für die Daten in der VD Anwendung durch den Benutzer,
Weiterleiten des Druckauftrags an einen auf dem Server (110) angelegten virtuellen Drucker (112),
Erzeugen der Druckdaten aus den Daten durch den virtuellen Drucker (112),
Weiterleiten und Speichern der Druckdaten auf einem anderen Server (120),
Benachrichtigung durch den anderen Server (120) via Benachrichtigungsserver (130) des mobilen Endgerätes (100),
dass die Druckdaten verfügbar gespeichert sind,
Herstellen einer Verbindung (104) vom mobilen Endgerät (100) zu dem anderen Server (120) durch das mobile Endgerät (100) und Anfordern der Druckdaten, wobeidie Adresse des anderen Servers (120) im mobilen Endgerät (100) vorbestimmt gespeichert ist oder von der Benachrichtigung umfasst ist,
Weiterleiten der Druckdaten von dem anderen Server (120) zu einem mit dem mobilen Endgerät (100) in Verbindung stehenden Drucker (200) über das mobile Endgerät (100).

## Claims

1. A server (110), on which a virtual desktop, VD, application is stored, which is configured
- to display a graphical user interface for the VD application on a screen of a mobile terminal device (100) and
- to be controlled by the mobile terminal device using a keyboard and/or a pointing means for producing data to be stored on the server (110) or for modifying data stored on the server (110),
wherein the VD application cannot access data that are stored locally on the mobile terminal device (100),
wherein the VD application is configured to be controlled from a mobile terminal device (100) such that
- from the VD application on the server (110), print data are generated from the data,
wherein the print data are generated for printing on a printer (200) which is or can be connected to the mobile terminal (100) and
the print data are forwarded to another server (120) and are stored on the other server (120), and the mobile terminal device (100) is notified about the availability of the print data after storing the print data from the other server via notification server (130), and the address of the other server (120) is stored in the mobile device (100) in a predefined form or is included in the notification.

2. The server (110) according to Claim 1, wherein on the server (110) a virtual printer (112) is created, which is configured to generate the print data from said data in pdf format, in PCL format and/or in postscript format.

3. The server (110) according to Claim 1 or 2, wherein the print data are augmented with print-related additional information.

4. A mobile terminal device (100) having a keyboard and/or a pointing means for controlling a virtual desktop VD application running on a server (110), for producing data to be stored on the server (110) or for modifying data stored on the server (110), wherein the VD application cannot access data that are stored locally on the mobile terminal device (100), wherein the mobile terminal device (100) is configured,
in response to a notification via notification server (130) about the availability of print data generated from the data on the server (110),
to request the print data, which are forwarded to another server (120) and have been saved on the other server (120), from the other server (120) and to forward them to a printer (200) connected to the mobile terminal,
wherein the address of the other server (120) is stored in the mobile device (100) in a predefined form or is included in the notification.

5. The mobile terminal device according to Claim 4, wherein the mobile terminal device (100) is configured to request a confirmation by a user in response to the notification, before the print data are requested and forwarded to the printer (200) by the other server (120) .

6. The mobile terminal device according to Claim 5, wherein as part of the confirmation the user is given the option to select the printer (200) from a list of printers and/or to modify at least one print setting.

7. The server (110) according to any one of Claims 1 - 3 or mobile terminal device according to any one of claims 5 - 7, wherein on invoking the VD application the mobile terminal (100) performs a registration on the server and/or transfers an ID of the mobile terminal device (100) to the server (110), and the mobile terminal device (100) is informed about the availability of the print data on the basis of the registration or the transferred ID of the mobile terminal device (100).

8. A method for transmitting print data, comprising the steps:
registering a mobile terminal device (100) in a virtual desktop, VD, application running on a server (110), and/or transferring an ID of the mobile terminal (100) as part of setting up a session (101) of the VD application, wherein the VD application cannot access data that are stored locally on the mobile terminal device (100),
controlling the VD application for producing data to be stored on the server (110) or for modifying data stored on the server (110) by a user of the mobile terminal device (100),
initiating a print job for the data in the VD application by the user,
forwarding the print job to a virtual printer (112) created on the server (110),
generating the print data from the data by the virtual printer (112),
forwarding and storing the print data on another server (120),
notification by the other server (120) via the notification server (130) of the mobile terminal device (100) that the print data are stored in available form,
establishing a connection (104) from the mobile terminal device (100) to the other server (120) by means of the mobile terminal (100) and requesting the print data, wherein the address of the other server (120) is stored in the mobile terminal (100) in a predefined form or is included in the notification,
forwarding the print data from the other server (120) to a printer (200), which is connected to the mobile terminal (100), via the mobile terminal (100).

## Revendications

1. Serveur (110) sur lequel une application de bureau virtuel, VD ou Virtual Desktop, est enregistrée, laquelle est configurée
- pour afficher, sur un écran d'un terminal mobile (100), une interface utilisateur graphique pour l'application VD, et
- pour être commandée par le terminal mobile via un clavier et/ou un moyen de pointage pour la génération de données à enregistrer sur le serveur (110) ou pour la modification de données enregistrées sur le serveur (110),
dans lequel l'application VD ne peut pas accéder à des données qui sont enregistrées localement sur le terminal mobile (100),
dans lequel l'application VD est étudiée pour être commandée par le terminal mobile (100) de telle sorte que
- à partir de l'application VD, des données d'impression sont générées sur le serveur (110) à partir des données,
dans lequel les données d'impression sont générées pour une impression sur une imprimante (200) raccordée, ou pouvant être raccordée au terminal mobile (100), et
les données d'impression sont transférées à un autre serveur (120) et sont enregistrées sur l'autre serveur (120), et le terminal mobile (100) est informé concernant la disponibilité des données d'impression après l'enregistrement des données d'impression par l'autre serveur via un serveur de notification (130), et l'adresse de l'autre serveur (120) est enregistrée de manière prédéfinie dans le terminal mobile (100) ou est comprise par la notification.

2. Serveur (110) selon la revendication 1, dans lequel une imprimante virtuelle (112) est constituée sur le serveur (110), laquelle est configurée pour générer, à partir des données, les données d'impression au format pdf, au format PCL et/ou au format Postscript.

3. Serveur (110) selon la revendication 1 ou 2, dans lequel les données d'impression sont enrichies par d'autres informations relatives à l'impression.

4. Terminal mobile (100) avec un clavier et/ou un moyen de pointage pour la commande d'une application de bureau virtuel, VD ou Virtual Desktop, exécutée sur un serveur (110), pour la génération de données à enregistrer sur le serveur (110) ou pour la modification de données enregistrées sur le serveur (110), dans lequel l'application VD ne peut pas accéder à des données enregistrées localement sur le terminal mobile (100), dans lequel le terminal mobile (100) est configuré,
en réaction à une notification via un serveur de notification (130) concernant la disponibilité de données d'impression générées à partir des données sur le serveur (110),
pour consulter les données d'impression, lesquelles ont été transférées à un autre serveur (120) et ont été enregistrées sur l'autre serveur (120), à partir de l'autre serveur (120) et les retransmettre à une imprimante (200) raccordée au terminal mobile,
dans lequel l'adresse de l'autre serveur (120) est enregistrée de manière prédéfinie dans le terminal mobile (100) ou bien est comprise dans la notification.

5. Terminal mobile selon la revendication 4, dans lequel le terminal mobile (100) est configuré, en réaction à la notification, pour consulter une confirmation d'un utilisateur avant que les données d'impression soient consultées par l'autre serveur (120) et transférées à l'imprimante (200).

6. Terminal mobile selon la revendication 5, dans lequel, dans le cadre de la confirmation, on donne à l'utilisateur la possibilité de sélectionner l'imprimante (200) dans une liste d'imprimantes et/ou de modifier au moins un paramètre d'impression.

7. Serveur (110) selon l'une des revendications 1 - 3 ou terminal mobile selon l'une des revendications 5 - 7, dans lequel, en cas d'appel de l'application VD, le terminal mobile (100) procède à un enregistrement sur le serveur (110) et/ou communique un ID du terminal mobile (100) au serveur (110), et le terminal mobile (100) est informé sur la disponibilité des données d'impression à l'aide de l'enregistrement ou de l'ID du terminal mobile (100) communiqué.

8. Procédé pour la transmission de données d'impression, comprenant les étapes suivantes :
l'enregistrement d'un terminal mobile (100) dans une application de bureau virtuel, VD ou Virtual Desktop, exécutée sur un serveur (110) et/ou la communication d'un ID du terminal mobile (100) dans le cadre de l'établissement d'une session (101) de l'application VD, dans lequel l'application VD ne peut pas accéder à des données enregistrées localement sur le terminal mobile (100),
la commande de l'application VD pour la génération de données à enregistrer sur le serveur (110) ou pour la modification de données enregistrées sur le serveur (110) par un utilisateur du terminal mobile (100),
le déclenchement par l'utilisateur d'une tâche d'impression pour les données dans l'application VD,
le transfert de la tâche d'impression à une imprimante virtuelle (112) constituée sur le serveur (110),
la génération des données d'impression à partir des données par l'imprimante virtuelle (112),
le transfert des données d'impression à un autre serveur (120) et leur enregistrement,
la notification par l'autre serveur (120), via un serveur de notification (130) du terminal mobile (100), en ce que les données d'impression sont enregistrées de manière disponible,
l'établissement d'une liaison (104) entre le terminal mobile (100) et l'autre serveur (120) par le terminal mobile (100) et la demande des données d'impression, dans lequel l'adresse de l'autre serveur (120) est enregistrée de manière prédéfinie dans le terminal mobile (100) ou bien est comprise par la notification,
le transfert des données d'impression depuis l'autre serveur (120) à une imprimante (200) en liaison avec le terminal mobile (100) via le terminal mobile (100).
